(19) **Europäisches Patentamt**
**European Patent Office**
**Office européen des brevets**

(11) **EP 4 297 473 A2**

(12) # EUROPEAN PATENT APPLICATION

(43) Date of publication:
**27.12.2023 Bulletin 2023/52**

(21) Application number: **23180080.6**

(22) Date of filing: **30.11.2018**

(51) International Patent Classification (IPC):
***H04W 24/10*** (2009.01)

(52) Cooperative Patent Classification (CPC):
**H04W 8/24; H04L 5/00; H04W 24/10; H04W 28/18;**
**H04W 36/0088; H04W 72/04**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **15.01.2018 CN 201810037251**

(62) Document number(s) of the earlier application(s) in
accordance with Art. 76 EPC:
**18899615.1 / 3 737 147**

(71) Applicant: **Huawei Technologies Co., Ltd.**
**Shenzhen, Guangdong 518129 (CN)**

(72) Inventors:
• **ZHANG, Hongping**
**Shenzhen, 518129 (CN)**

• **ZENG, Qinghai**
**Shenzhen, 518129 (CN)**

(74) Representative: **Pfenning, Meinig & Partner mbB**
**Patent- und Rechtsanwälte**
**Theresienhöhe 11a**
**80339 München (DE)**

Remarks:
•This application was filed on 19.06.2023 as a
divisional application to the application mentioned
under INID code 62.
•Claims filed after the date of filing of the application
/ after the date of receipt of the divisional application
(Rule 68(4) EPC).

(54) **COMMUNICATION METHOD AND APPARATUS**

(57) This application provides a communication method and a communications apparatus. The method includes: sending capability information to a network device, where the capability information includes first capability information corresponding to a first frequency range and second capability information corresponding to a second frequency range, the first capability information and the second capability information are independent information, the first capability information includes first indication information used to indicate whether a band in the first frequency range requires a measurement gap, and the second capability information includes second indication information used to indicate whether a band in the second frequency range requires a measurement gap; receiving measurement gap configuration information determined based on the capability information, where the measurement gap configuration information is information used to configure the measurement gap; and performing measurement based on the measurement gap configuration information. Therefore, signaling overheads can be reduced, and storage overheads of a network device can also be reduced.

EP 4 297 473 A2

## Description

This application claims priority to Chinese Patent Application No. 201810037251.5, filed with the China National Intellectual Property Administration on January 15, 2018 and entitled "COMMUNICATION METHOD AND COMMUNICATIONS APPARATUS", which is incorporated herein by reference in its entirety.

## TECHNICAL FIELD

This application relates to the field of communications technologies, and in particular, to a communication method and a communications apparatus.

## BACKGROUND

In a mobile communications system, a terminal device performs measurement based on a measurement configuration delivered by a base station and reports a measurement report to the base station, and the base station performs mobility decision, carrier management, or the like based on the measurement report. In a process in which the terminal device communicates with one or more serving cells, the terminal device measures a neighboring cell for handover or cell reselection. The measurement includes measurement of a neighboring cell in a same system and measurement of a cell in a different system. The neighboring cell may use a frequency different from that of a current serving cell. Due to a limitation of a capability of the terminal device, the terminal device may need to be configured with a measurement gap (gap). For example, a 6 ms measurement gap is configured in every 40 ms. During the measurement gap, the terminal device stops data transmission in the serving cell and performs a measurement operation instead, and the base station does not schedule the terminal device during the measurement gap. In a long term evolution (long term evolution, LTE) system, a terminal device reports capability information to a base station. After receiving the capability information, the base station determines, based on a current operating band combination and the capability information that are of the terminal device, whether a measurement gap is required for measurement of a target band, and further configures the measurement gap for the terminal device when the measurement gap is required.

In a 5th generation mobile communications (the 5th Generation mobile communication technology, 5G) system, in a possible division manner, frequency resources are divided into two frequency ranges (Frequency Range, FR): FR1 and FR2. FR1 is less than 24 GHz, and FR2 is from 24 GHz to 100 GHz. For example, a frequency resource used for the LTE system is in FR1, and a frequency resource used for the 5G system may be in FR1 or FR2.

In the 5G system, a terminal device supports a relatively large quantity of band combinations. The band combination is a combination that is supported by the terminal device and that is of bands to which serving cells of carrier aggregation belong. Consequently, the terminal device reports a large amount of capability information, and the large amount of capability information cannot be sent to a network by using one piece of signaling over an air interface. Therefore, signaling overheads are excessively high, and storage overheads of a base station are also high.

## SUMMARY

This application provides a communication method and a communications apparatus, to reduce signaling overheads.

According to a first aspect, this application provides a communication method, including:
sending capability information to a network device, where the capability information includes first capability information corresponding to a first frequency range and second capability information corresponding to a second frequency range, the first capability information includes first indication information used to indicate whether a band in the first frequency range requires a measurement gap, and the second capability information includes second indication information used to indicate whether a band in the second frequency range requires a measurement gap; receiving, from the network device, measurement gap configuration information determined based on the capability information, where the measurement gap configuration information is information used to configure a measurement gap; and performing measurement based on the measurement gap configuration information.

According to the communication method provided in the first aspect, the first capability information corresponding to the first frequency range and the second capability information corresponding to the second frequency range are separated and reported to the network device as independent information, so that reporting specific to a band combination of a band corresponding to the first frequency range and a band corresponding to the second frequency range is avoided, and reporting of an indication that indicates whether a measurement gap is required and that corresponds to the band combination is avoided, thereby reducing signaling overheads, and also reducing storage overheads of the network device.

In a possible design, the first capability information further includes a first band list and a first band combination list, where the first band list is a list including all bands supported by a terminal device in the first frequency range, the first band combination list is a list including a band combination supported by the terminal device in the first frequency range, and the first indication information includes an indication indicating whether each band that is in the first band list and that corresponds to each band combination in the first band combination list requires a measurement gap; and the second capability information includes a second band list and a second band combination list, where the second band list is a list including all bands supported by a terminal device in the second frequency range, the second band combination list is a list including a band combination supported by the terminal device in the second frequency range, and the second indication information includes an indication indicating whether each band that is in the second band list and that corresponds to each band combination in the second band combination list requires a measurement gap.

In a possible design, some or all of band combinations in the first band combination list or the second band combination list are indicated by using a band identifier combination, or are indicated by using a combination condition.

According to the communication method provided in this implementation, some or all of the band combinations in the first band combination list or the second band combination list are indicated by using the combination condition, thereby further reducing signaling overheads.

In a possible design, the combination condition includes at least one of the following:

a quantity of bands in the band combination is equal to or less than a first value;
a maximum bandwidth of a serving cell corresponding to a band in the band combination does not exceed a second value;
a total bandwidth of all serving cells corresponding to the bands in the band combination does not exceed a third value; or
a total quantity of all serving cells corresponding to the bands in the band combination does not exceed a fourth value.

In a possible design, the measurement gap configuration information includes a measurement gap configuration and a type of measurement gap, where the type of measurement gap is one of a measurement gap corresponding to the terminal device, a measurement gap corresponding to the first frequency range, and a measurement gap corresponding to the second frequency range.

In a possible design, the performing measurement based on the measurement gap configuration information includes:

when the type of measurement gap is a measurement gap corresponding to the first frequency range, in the measurement gap, stopping communication in a serving cell in the first frequency range, and measuring a neighboring cell in the first frequency range;
when the type of measurement gap is a measurement gap corresponding to the first frequency range, in the measurement gap, stopping communication in a serving cell in the second frequency range, and measuring a neighboring cell in the second frequency range; or
when the type of measurement gap is a measurement gap corresponding to the terminal device, in the measurement gap, stopping communication in all serving cells, and measuring a neighboring cell in the first frequency range and a neighboring cell in the second frequency range.

In a possible design, the first frequency range is from 0 GHz to 24 GHz, and the second frequency range is from 24 GHz to 100 GHz.

According to a second aspect, this application provides a communication method, including:

receiving, by a network device, capability information, where the capability information includes first capability information corresponding to a first frequency range and second capability information corresponding to a second frequency range, the first capability information includes first indication information used to indicate whether a band in the first frequency range requires a measurement gap, and the second capability information includes second indication information used to indicate whether a band in the second frequency range requires a measurement gap;
determining, by the network device based on a target measurement frequency of a terminal device, a current operating band combination of the terminal device, and the capability information, whether the target measurement frequency requires a measurement gap; and
sending, by the network device when determining that the target measurement frequency requires the measurement gap, measurement gap configuration information to the terminal device, where the measurement gap configuration information is information used to configure the measurement gap.

According to the communication method provided in the second aspect, the first capability information corresponding to the first frequency range and the second capability information corresponding to the second frequency range are separated and reported to the network device as independent information, so that reporting specific to a band combination of a band corresponding to the first frequency range and a band corresponding to the second frequency range is avoided, and reporting of an indication that indicates whether a measurement gap is required and that corresponds to the band combination is avoided, thereby reducing signaling overheads, and also reducing storage overheads of the network device.

In a possible design, the determining, by the network device based on a target measurement frequency of a terminal device, a current operating band combination of the terminal device, and the capability information, whether the target measurement frequency requires a measurement gap includes:

if the target measurement frequency belongs to the first frequency range, determining, by the network device based on the first capability information and a first band combination, whether the target measurement frequency requires the measurement gap, where the first band combination is a band combination that belongs to the first frequency range and that is in the current operating band combination of the terminal device; or
if the target measurement frequency belongs to the second frequency range, determining, by the network device based on the second capability information and a second band combination, whether the target measurement frequency requires the measurement gap, where the second band combination is a band combination that belongs to the second frequency range and that is in the current operating band combination of the terminal device.

In a possible design, the first capability information further includes a first band list and a first band combination list, where the first band list is a list including all bands supported by a terminal device in the first frequency range, the first band combination list is a list including a band combination supported by the terminal device in the first frequency range, and the first indication information includes an indication indicating whether each band that is in the first band list and that corresponds to each band combination in the first band combination list requires a measurement gap; and the second capability information includes a second band list and a second band combination list, where the second band list is a list including all bands supported by a terminal device in the second frequency range, the second band combination list is a list including a band combination supported by the terminal device in the second frequency range, and the second indication information includes an indication indicating whether each band that is in the second band list and that corresponds to each band combination in the second band combination list requires a measurement gap.

In a possible design, some or all of band combinations in the first band combination list or the second band combination list are indicated by using a band identifier combination, or are indicated by using a combination condition.

According to the communication method provided in this implementation, some or all of the band combinations in the first band combination list or the second band combination list are indicated by using the combination condition, thereby further reducing signaling overheads.

In a possible design, the combination condition includes at least one of the following:

a quantity of bands in the band combination is equal to or less than a first value;
a maximum bandwidth of a serving cell corresponding to a band in the band combination does not exceed a second value;
a total bandwidth of all serving cells corresponding to the bands in the band combination does not exceed a third value; or
a total quantity of all serving cells corresponding to the bands in the band combination does not exceed a fourth value.

In a possible design, the determining, by the network device based on the first capability information and a first band combination, whether the target measurement frequency requires the measurement gap includes:

determining, by the network device based on the first indication information and the first band combination, whether the target measurement frequency requires the measurement gap; or
if the first band combination list includes a band combination including the first band combination and a band to which the target measurement frequency belongs, determining, by the network device, that the target measurement frequency does not require the measurement gap.

In a possible design, the determining, by the network device based on the second capability information and a second band combination, whether the target measurement frequency requires the measurement gap includes:

determining, by the network device based on the second indication information and the second band combination, whether the target measurement frequency requires the measurement gap; or
if the second band combination list includes a band combination including the second band combination and a band to which the target measurement frequency belongs, determining, by the network device, that the target measurement frequency does not require the measurement gap.

In a possible design, the measurement gap configuration information includes a measurement gap configuration and a type of measurement gap, where the type of measurement gap is one of a measurement gap corresponding to the terminal device, a measurement gap corresponding to the first frequency range, and a measurement gap corresponding to the second frequency range.

In a possible design, the measurement gap configuration information includes: a first measurement gap configuration and a type of first measurement gap, and a second measurement gap configuration and a type of second measurement gap, where the type of first measurement gap is a measurement gap corresponding to the first frequency range, and the type of second measurement gap is a measurement gap corresponding to the second frequency range.

In a possible design, the first frequency range is from 0 GHz to 24 GHz, and the second frequency range is from 24 GHz to 100 GHz.

According to a third aspect, this application provides a communication method, including:

receiving, by a network device, capability information, where the capability information includes first capability information corresponding to a first frequency range and second capability information corresponding to a second frequency range, the first capability information includes a first band list and a first band combination list, and the second capability information includes a second band list and a second band combination list; and determining, by the network device based on the first band combination list and the second band combination list, a band combination supported by a terminal device.

According to the communication method provided in the third aspect, the terminal device does not need to report separate indication information indicating whether a measurement gap is required, and a network may determine, based on the first band combination list or the second band combination list in the capability information reported by the terminal device, whether the measurement gap is required. Therefore, a size (or may be referred to as a size) of the capability information reported by the terminal device is reduced, signaling overheads are reduced, and storage overheads of the network device can also be reduced.

In a possible design, the method further includes: determining, by the network device based on a target measurement frequency of the terminal device, a current operating band combination of the terminal device, and the capability information, whether a target measurement frequency requires a measurement gap.

In a possible design, the first frequency range is from 0 GHz to 24 GHz, and the second frequency range is from 24 GHz to 100 GHz.

According to a fourth aspect, this application provides a communication method, including:

receiving, by a terminal device, third measurement gap configuration information from an LTE network device; and when receiving, from the LTE network device, a message that an NR cell is added as a serving cell or receives an NR frequency measurement configuration sent by the LTE network device, deleting, by the terminal device, the third measurement gap configuration information.

According to the communication method provided in the third aspect, the terminal device deletes a measurement gap configured in an LTE system, to resolve a problem that whether the measurement gap configured in LTE can be used to measure a neighboring cell in FR2 is unclear due to a type of measurement gap is not indicated after the terminal device receives the message that an NR cell is added as a serving cell or receives the NR frequency measurement configuration.

In a possible design, the method further includes: receiving, by the terminal device, fourth measurement gap configuration information from the network device; and measuring, by the terminal device, a target measurement frequency based on the measurement gap configuration information.

According to a fifth aspect, this application provides a communication method, including: receiving, by a terminal device, fifth measurement gap configuration information from an LTE network device, where the fifth measurement gap configuration information includes a measurement gap configuration and a type of measurement gap; and measuring, by the terminal device, a target measurement frequency based on the fifth measurement gap configuration information.

According to the communication method provided in the fifth aspect, the network device configures the fifth measurement gap configuration information, and the fifth measurement gap configuration information carries the type of measurement gap, to avoid a problem that indicates whether the measurement gap can be used to measure a neighboring cell in FR2 and that is caused when the type of measurement gap is not carried.

In a possible design, the method further includes:

receiving, by the terminal device from the LTE network device, a message that an NR cell is added as a serving cell, or receiving an NR frequency measurement configuration sent by the LTE network device; and measuring, by the terminal device, the target measurement frequency based on the fifth measurement gap configuration information.

According to the communication method provided in this implementation, the LTE network device configures the measurement gap for the terminal device, and indicates the type of measurement gap. In this way, when the terminal device receives the message that an NR cell is added as a serving cell or receives the NR frequency measurement configuration, the terminal device can determine, based on the fifth measurement gap configuration information, whether the measurement gap can be used to measure the neighboring cell in FR2.

According to a sixth aspect, this application provides a communication method, including: sending, by a network device, a message used for adding or deleting a serving cell to a terminal device; receiving, by the network device from the terminal device, third indication information corresponding to an updated current operating band combination, where the third indication information includes an indication indicating whether each band that is supported by the terminal device and that corresponds to the updated current operating band combination requires a measurement gap; and determining, by the network device based on a target measurement frequency and the third indication information, whether the target measurement frequency requires a measurement gap.

According to the communication method provided in the sixth aspect, a problem of how to configure the measurement gap after a serving cell of the terminal device is changed is resolved.

According to a seventh aspect, this application provides a communication method, including: receiving, by a terminal device from a network device, a message used for adding or deleting a serving cell, or a message used for adding or deleting a measurement frequency; determining, by the terminal device, whether a measurement gap is currently required; and if the measurement gap is not required, sending, to the network device, an indication message indicating that the measurement gap is not required or a request message for releasing the measurement gap; or if the measurement gap is required, sending, to the network device, a measurement gap indication message indicating that the measurement gap is required or a request message for configuring the measurement gap, where the indication message or the request message also carries a type of required measurement gap.

According to the communication method provided in the seventh aspect, a problem of how to configure the measurement gap after the serving cell is added or deleted or after the measurement frequency is added or deleted is resolved without a need to report capability information, thereby reducing signaling overheads.

According to an eighth aspect, this application provides a communications apparatus, including a module, a component, or a circuit configured to perform the communication method according to any one of the first aspect and the possible designs of the first aspect, or the communication method according to any one of the second aspect and the possible designs of the second aspect, or the communication method according to any one of the third aspect and the possible designs of the third aspect, or the communication method according to any one of the fourth aspect and the possible designs of the fourth aspect, or the communication method according to any one of the fifth aspect and the possible designs of the fifth aspect, or the communication method according to any one of the sixth aspect and the possible designs of the sixth aspect, or the communication method according to any one of the seventh aspect and the possible designs of the seventh aspect.

According to a ninth aspect, this application provides a terminal device, including a memory and a processor, where

the memory is configured to store a program instruction; and
the processor is configured to invoke the program instruction in the memory to perform the communication method according to any one of the first aspect and the possible designs of the first aspect, or the communication method according to any one of the fourth aspect and the possible designs of the fourth aspect, or the communication method according to any one of the fifth aspect and the possible designs of the fifth aspect, or the communication method according to any one of the seventh aspect and the possible designs of the seventh aspect.

According to a tenth aspect, this application provides a network device, including a memory and a processor, where

the memory is configured to store a program instruction; and
the processor is configured to invoke the program instruction in the memory to perform the communication method according to any one of the second aspect and the possible designs of the second aspect, or the communication method according to any one of the third aspect and the possible designs of the third aspect, or the communication method according to any one of the sixth aspect and the possible designs of the sixth aspect.

According to an eleventh aspect, this application provides a readable storage medium, where the readable storage medium stores an execution instruction. When at least one processor of a communications apparatus executes the execution instruction, the communications apparatus performs the communication method according to any one of the first aspect to the seventh aspect.

According to a twelfth aspect, this application provides a program product, where the program product includes an execution instruction, and the execution instruction is stored in a readable storage medium. At least one processor of a communications apparatus may read the execution instruction from the readable storage medium, and the at least one processor executes the execution instruction, so that the communications apparatus implements the communication method according to any one of the first aspect to the seventh aspect.

According to a thirteenth aspect, this application provides a chip, where the chip is connected to a memory, or a memory is integrated on the chip, and when a software program stored in the memory is executed, the communication method according to any one of the foregoing aspects is implemented.

## DESCRIPTION OF DRAWINGS

FIG. 1 is a schematic architectural diagram of a communications system;
FIG. 2 is an interaction flowchart of an embodiment of a communication method according to this application;
FIG. 3 is an interaction flowchart of an embodiment of a communication method according to this application;
FIG. 4 is an interaction flowchart of an embodiment of another communication method according to this application;
FIG. 5 is a flowchart of an embodiment of a communication method according to this application;
FIG. 6 is a flowchart of an embodiment of a communication method according to this application;
FIG. 7 is a flowchart of an embodiment of a communication method according to this application;
FIG. 8 is a flowchart of an embodiment of a communication method according to this application;
FIG. 9 is a schematic structural diagram of an embodiment of a communications apparatus according to this application;
FIG. 10 is a schematic structural diagram of an embodiment of a communications apparatus according to this application; and
FIG. 11 is a schematic structural diagram of a communications apparatus according to this application.

## DESCRIPTION OF EMBODIMENTS

Embodiments of this application may be applied to a wireless communications system. It should be noted that the wireless communications system mentioned in the embodiments of this application includes but is not limited to: a narrowband Internet of things (Narrow band- Internet of Things, NB-IoT) system, a global system for mobile communications (Global System for Mobile Communications, GSM), an enhanced data rates for GSM evolution (Enhanced Data rate for GSM Evolution, EDGE) system, a wideband code division multiple access (Wideband Code Division Multiple Access, WCDMA) system, a code division multiple access (Code Division Multiple Access, CDMA2000) 2000 system, a time division-synchronous code division multiple access (Time Division-Synchronous Code Division Multiple Access, TD-SCDMA) system, a long term evolution (Long Term Evolution, LTE) system, and a next-generation 5G mobile communications system.

Communications apparatuses in this application mainly include a network device and a terminal device.

The network device may be a base station, an access point, or an access network device, or may be a device that is in an access network and that communicates with a wireless terminal through one or more sectors on an air interface. The network device may be configured to: perform two-way conversion on a received over-the-air frame and an IP packet, and serve as a router between the wireless terminal and another part of the access network, where the another part of the access network may include an Internet protocol (IP) network. The network device may further coordinate attribute management of the air interface. For example, the network device may be an evolved NodeB (Evolutional NodeB, eNB or eNodeB) in long term evolution (long term evolution, LTE), a relay node or an access point, or a next generation NodeB in a 5G network, for example, a gNB. This is not limited herein.

The terminal device may be a wireless terminal or a wired terminal. The wireless terminal may be a device that provides a user with voice and/or other service data connectivity, a handheld device with a radio connection function, or another processing device connected to a radio modem. The wireless terminal may communicate with one or more core networks through a RAN. The wireless terminal may be a mobile terminal, such as a mobile phone (or referred to as a "cellular" phone) and a computer with a mobile terminal, for example, may be a portable, pocket-sized, handheld, computer built-in, or vehicle-mounted mobile apparatus, which exchanges voice and/or data with the radio access network. For example, the wireless terminal may be a device such as a personal communications service (Personal Communication Service, PCS) phone, a cordless telephone set, a session initiation protocol (Session Initiation Protocol, SIP) phone, a wireless local loop (Wireless Local Loop, WLL) station, or a personal digital assistant (Personal Digital Assistant, PDA). The wireless terminal may also be referred to as a system, a subscriber unit (Subscriber Unit), a subscriber station (Subscriber Station), a mobile station (Mobile Station), a mobile console (Mobile), a remote station (Remote Station), a remote terminal (Remote Terminal), an access terminal (Access Terminal), a user terminal (User Terminal), a user agent (User Agent), a user device (User Device or User Equipment). This is not limited herein.

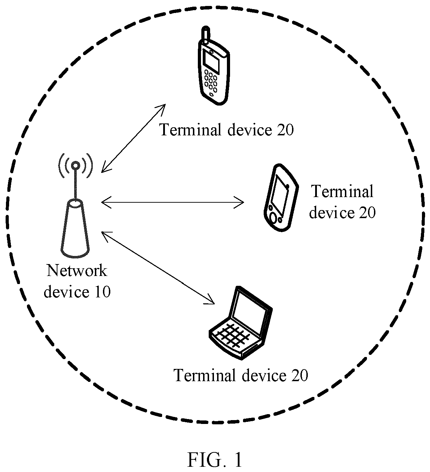

FIG. 1 is a schematic architectural diagram of a communications system. As shown in FIG. 1, the communications system in this embodiment of this application may include one or more network devices and one or more terminal devices, and the network devices communicate with the terminal devices.

Due to introduction of a high frequency, frequency resources may be divided into two or more ranges. Two ranges are used as an example. For example, the two ranges are FR1 and FR2, FR1 is less than 24 GHz, and FR2 is from 24 GHz to 100 GHz. If the terminal device still reports capability information to a base station in an existing capability information reporting manner, the capability information includes a band (Band) list (the band list includes bands in FR1 and FR2) supported by the terminal device, a band combination list (the band combination list also needs to include a band combination of a band in FR1 and a band in FR2) supported by the terminal device, and a measurement capability. The measurement capability includes an indication indicating whether each band, in the band list, in each band combination in the band combination list requires a measurement gap for measurement. For example, the terminal device supports 10 bands. Five bands in FR1 are a band 1, a band 2, a band 3, a band 4, and a band 5, and five bands in FR2 are a band 6, a band 7, a band 8, a band 9, and a band 10. The terminal device supports a large quantity of band combinations, and a corresponding measurement capability also needs to indicate the same quantity. Therefore, signaling overheads are excessively high. To resolve this problem, this embodiment of this application provides a communication method. First capability information corresponding to a first frequency range (for example, FR1) and second capability information corresponding to a second frequency range (for example, FR2) are separated and reported to the network device as independent information, thereby reducing signaling overheads. It should be noted that, in the communication method provided in this embodiment of this application, frequency division for each frequency range is not limited. In addition, the communication method is not limited to two frequency ranges, and is not limited to the frequency ranges in the foregoing example either, and is applicable to division for more frequency ranges. For example, when there are three frequency ranges, similar to the method in this embodiment of this application, first capability information corresponding to a first frequency range, second capability information corresponding to a second frequency range, and third capability information corresponding to a third frequency range are reported to the network device as independent information, which all fall within the protection scope of this embodiment of this application. The following describes a communication method and a communications apparatus provided in the embodiments of this application in detail with reference to the accompanying drawings.

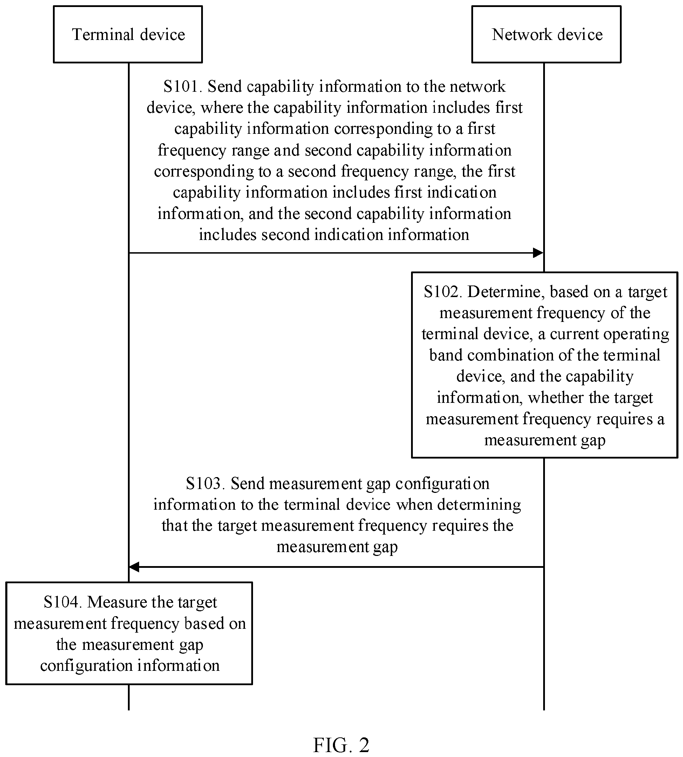

FIG. 2 is an interaction flowchart of an embodiment of a communication method according to this application. As shown in FIG. 2, the method in this embodiment may include the following steps.

S101. A terminal device sends capability information to a network device, where the capability information includes first capability information corresponding to a first frequency range and second capability information corresponding to a second frequency range, the first capability information includes first indication information used to indicate whether a band in the first frequency range requires a measurement gap, and the second capability information includes second indication information used to indicate whether a band in the second frequency range requires a measurement gap.

It may be understood that, in this embodiment of this application, the first capability information and the second capability information are independent information. For example, the first capability information and the second capability information are two different fields or information elements in the capability information, and a band list in the first capability information and a band list in the second capability information correspond to different information elements.

In a possible manner, the first capability information corresponding to the first frequency range may be related information about a band belonging to the first frequency range, and the second capability information corresponding to the second frequency range may be related information about a band belonging to the second frequency range. For example, the first frequency range and the second frequency range are respectively FR1 and FR2, FR1 is less than 24 GHz, and FR2 is from 24 GHz to 100 GHz. In consideration of different features of high and low frequencies, for example, a receiver of the terminal device cannot be shared by the high frequency and the low frequency, and the high frequency and the low frequency have their respective receivers; and when the capability information is designed in this embodiment of this application, in consideration of a carrier aggregation capability and a measuring capability about whether a measurement gap is required, an FR1-related capability and an FR2-related capability are separated from each other, and do not affect each other. In this embodiment, the first capability information corresponding to the first frequency range and the second capability information corresponding to the second frequency range are separately reported to the network device. In comparison with a capability information reporting manner in the prior art, reporting specific to a band combination of a band in the first frequency range and a band in the second frequency range is avoided, and reporting of an indication that corresponds to the band combination and that indicates whether the measurement gap is required is avoided, thereby reducing signaling overheads. For example, in FR1, the terminal device supports five bands: a band 1, a band 2, a band 3, a band 4, and a band 5, and in FR2, the terminal device supports 10 bands: a band 6, a band 7, a band 8, a band 9, a band 10, a band 11, a band 12, a band 13, a band 14, and a band 15. For example, when a band combination supported by the terminal device includes two bands, reporting specific to

$C_{15}^2 - C_5^2 - C_{10}^2$ band combinations and indications that correspond to the band combinations and that indicate whether measurement gaps are required is avoided.

In this embodiment, optionally, the first capability information further includes a first band list and a first band combination list. The first band list is a list including all bands supported by the terminal device in the first frequency range, and the first band combination list is a list including a band combination supported by the terminal device in the first frequency range. The band combination in the first frequency range is a band combination including only bands in the first frequency range. The band combination is a combination that is supported by the terminal device and that is of bands to which a serving cell of carrier aggregation belongs. The first indication information includes an indication indicating whether each band that is in the first band list and that corresponds to each band combination in the first band combination list requires a measurement gap. A band in the first band list is a band of a measured neighboring cell.

The second capability information further includes a second band list and a second band combination list. The second band list is a list including all bands supported by the terminal device in the second frequency range, and the second band combination list is a list including a band combination supported by the terminal device in the second frequency range. The band combination in the second frequency range is a combination of only bands in the second frequency range. The second indication information includes an indication indicating whether each band that is in the second band list and that corresponds to each band combination in the second band combination list requires a measurement gap.

The band combination in the first band combination list or the second band combination list is indicated by using a band identifier combination. To be specific, the band combination in the first band combination list is an identifier combination of bands in the first frequency range, and the band combination in the second band combination list is an identifier combination of bands in the second frequency range. For example, a band combination in the first band combination list is band 1+band 2+band 3, and a band combination in the second band combination list is band 6+band 8+band 9+band 10. The band 1, the band 2, the band 3, the band 6, the band 8, the band 9, and the band 10 are all band identifiers.

The first indication information may be used to indicate whether each band that is in the first band list and that corresponds to each band combination in the first band combination list requires the measurement gap. Table 1 is a possible form indicating whether each band that is in the first band list and that corresponds to each band combination in the first band combination list requires the measurement gap. For example, in Table 1, the first frequency range is FR1, and the second frequency range is FR2. When the first capability information includes the first band list (including five bands: FR1-1, FR1-2, FR1-3, FR1-4, and FR1-5) and the first band combination list (including seven band combinations: FR1 BC-1, FR1 BC-2, FR1 BC-3, FR1 BC-4, FR1 BC-5, FR1 BC-6, and FR1 BC-7), an example of a possible manner of an indication (denoted as Gap? in the table) indicating whether each band that is in the first band list and that corresponds to each band combination in the first band combination list requires the measurement gap is provided. The indication can indicate "yes" and "no" by using one bit or in another manner.

**Table 1**

|          | FR1-1 | FR1-2 | FR1-3 | FR1-4 | FR1-5 |
|----------|-------|-------|-------|-------|-------|
| FR1 BC-1 | Gap?  | Gap?  | Gap?  | Gap?  | Gap?  |
| FR1 BC-2 | Gap?  | Gap?  | Gap?  | Gap?  | Gap?  |
| FR1 BC-3 | Gap?  | Gap?  | Gap?  | Gap?  | Gap?  |
| FR1 BC-4 | Gap?  | Gap?  | Gap?  | Gap?  | Gap?  |
| FR1 BC-5 | Gap?  | Gap?  | Gap?  | Gap?  | Gap?  |
| FR1 BC-6 | Gap?  | Gap?  | Gap?  | Gap?  | Gap?  |
| FR1 BC-7 | Gap?  | Gap?  | Gap?  | Gap?  | Gap?  |

The second indication information may be used to indicate whether each band that is in the second band list and that corresponds to each band combination in the second band combination list requires the measurement gap. Table 2 is a possible form indicating whether each band that is in the second band list and that corresponds to each band combination in the second band combination list requires the measurement gap. For example, in Table 2, the first frequency range is FR1, and the second frequency range is FR2. When the second capability information includes the second band list (including five bands: FR2-1, FR2-2, FR2-3, FR2-4, and FR2-5) and the second band combination list (including eight band combinations: FR2 BC-1, FR2 BC-2, FR2 BC-3, FR2 BC-4, FR2 BC-5, FR2 BC-6, FR2 BC-7, and FR2 BC-8), an example of a possible manner of an indication (denoted as Gap? in the table) indicating whether each band that is in the second band list and that corresponds to each band combination in the second band combination list requires the measurement gap is provided. The indication can indicate "yes" and "no" by using one bit or in another manner.

**Table 2**

|  | FR2-1 | FR2-2 | FR2-3 | FR2-4 | FR2-5 |
|---|---|---|---|---|---|
| FR2 BC-1 | Gap? | Gap? | Gap? | Gap? | Gap? |
| FR2 BC-2 | Gap? | Gap? | Gap? | Gap? | Gap? |
| FR2 BC-3 | Gap? | Gap? | Gap? | Gap? | Gap? |
| FR2 BC-4 | Gap? | Gap? | Gap? | Gap? | Gap? |
| FR2 BC-5 | Gap? | Gap? | Gap? | Gap? | Gap? |
| FR2 BC-6 | Gap? | Gap? | Gap? | Gap? | Gap? |
| FR2 BC-7 | Gap? | Gap? | Gap? | Gap? | Gap? |
| FR2 BC-8 | Gap? | Gap? | Gap? | Gap? | Gap? |

As shown in Table 1 and Table 2, the first capability information corresponding to FR1 and the second capability information corresponding to FR2 are reported as independent information. Because the indication that corresponds to the band combination of FR1 and that indicates whether the measurement gap is required is associated only with bands supported by the terminal device in FR1, but is not associated with a band in FR2, and the indication that corresponds to the band combination of FR2 and that indicates whether the measurement gap is required is associated only with bands supported by the terminal device in FR2, but is not associated with a band in FR1, thereby reducing signaling overheads.

Optionally, to further reduce signaling overheads, some or all of band combinations in the first band combination list or the second band combination list are indicated by using a combination condition.

The combination condition includes at least one of the following:

a quantity of bands in the band combination is equal to or less than a first value, where for example, the quantity of bands included in the band combination is equal to or less than 3, the band combination is a combination that is supported by the terminal device and that is of bands to which a serving cell of carrier aggregation belongs, different serving cells use resources of a same band, and bands of these serving cells may be considered as one band;

a maximum bandwidth of a serving cell corresponding to a band in the band combination does not exceed a second value, where for example, the maximum bandwidth of the serving cell corresponding to the band in the band combination does not exceed 20 MHz;

a total bandwidth of all serving cells corresponding to bands in the band combination does not exceed a third value, where for example, a quantity of bands included in the band combination is 3, and a total bandwidth of all serving cells corresponding to the three bands does not exceed 100 MHz; or

a total quantity of all serving cells corresponding to bands in the band combination does not exceed a fourth value, where for example, the total quantity of all the serving cells corresponding to the bands in the band combination does not exceed 4.

For example, the combination condition may alternatively be as follows: A quantity of bands in the band combination is equal to or less than 3, and a maximum bandwidth of a serving cell corresponding to the band in the band combination does not exceed 40 MHz.

To be specific, band combinations indicated by using combination conditions may be actually a plurality of band combinations meeting the combination conditions. The plurality of band combinations correspond to a same indication indicating whether a measurement gap is required, thereby further reducing signaling overheads.

S102. The network device determines, based on a target measurement frequency of the terminal device, a current operating band combination of the terminal device, and the capability information, whether the target measurement frequency requires a measurement gap.

The target measurement frequency is a frequency that needs to be measured and is delivered by the network device to the terminal device, and the current operating band combination of the terminal device is a combination of bands to which frequency resources of all current serving cells of the terminal device belong. For example, when three serving cells currently serve the terminal device, and frequency resources used by the serving cells respectively belong to the band 1, the band 3, and the band 6, the current operating band combination of the terminal device is band 1+band 3+band 6. It may be understood that the network device may deliver, to the terminal device, one or more frequencies that need to be measured. Each frequency that needs to be measured by the terminal device may be considered as a target measurement frequency. For each target measurement frequency, a manner of determining whether the target measurement frequency requires a measurement gap is similar.

In a possible implementation, S 102 may be specifically as follows:

If the target measurement frequency belongs to the first frequency range, the network device determines, based on the first capability information and a first band combination, whether the target measurement frequency requires the measurement gap, where the first band combination is a band combination that belongs to the first frequency range and that is in the current operating band combination of the terminal device; or if the target measurement frequency belongs to the second frequency range, the network device determines, based on the second capability information and a second band combination, whether the target measurement frequency requires the measurement gap, where the second band combination is a band combination that belongs to the second frequency range and that is in the current operating band combination of the terminal device.

For example, the first frequency range is FR1, and the second frequency range is FR2. If the target measurement frequency belongs to FR1, whether the target measurement frequency requires the measurement gap is determined based on the first capability information and a band combination that belongs to FR1 (namely, the first band combination excluding a serving cell of FR2) and that is in the current operating band combination of the terminal device. For example, the current operating band combination of the terminal device is FR1-1, FR1-2, FR2-1, and FR2-2, FR1-1 and FR1-2 are bands in FR1, and FR2-1 and FR2-2 are bands in FR2. In this case, a band combination that belongs to the first frequency range and that is in the current operating band combination is a combination of FR1-1 and FR1-2 (in other words, the first band combination is a combination of FR1-1 and FR1-2), and a band combination that belongs to the second frequency range and that is in the current operating band combination is a combination of FR2-1 and FR2-2 (in other words, the second band combination is a combination of FR2-1 and FR2-2). When FR1-x is measured, whether FR1-x requires a measurement gap is determined based on the combination of FR1-1 and FR1-2. When FR2-x is measured, whether FR2-x requires a measurement gap is determined based on the combination of FR2-1 and FR2-2. The first band combination or the second band combination may be an empty combination or include only one band. If the first band combination or the second band combination is the empty combination, the network device determines that the measurement gap is not required. If the first band combination or the second band combination is the empty combination, it indicates that the terminal device is fully capable of measuring the target frequency without a need of the measurement gap. Therefore, the measurement gap is not required. If the first band combination or the second band combination includes only one band, whether the measurement gap is required may be determined based on existing indication information. Alternatively, whether the measurement gap is required may be determined in another manner. This is not limited in this embodiment of this application. Alternatively, if none of current serving cells belongs to a same FR as that of the target frequency, the measurement gap is not required when the target frequency is to be measured.

Optionally, if the terminal device supports a specific band combination, when the current operating band combination of the terminal device is a subset of the band combination, a gap is not required by default when a band other than the subset is to be measured. For example, the band combination includes four bands (xl, x2, x3, and x4), if the current operating band combination is x1 and x2, a gap is not required for measurement of x3 and x4. If the current operating band combination is x1, x2, and x3, a gap is not required for measurement of x4. To be specific, when the terminal device supports aggregation of the current operating band combination and a band to which the target measurement frequency belongs (in other words, when the terminal device supports, in the current operating band combination, in adding the band to which the target measurement frequency belongs as a serving cell), a gap is not required, thereby reducing an amount of the capability information reported by the terminal device, and reducing signaling overheads.

Optionally, that the network device determines, based on the first capability information and the first band combination, whether the target measurement frequency requires the measurement gap may specifically include: The network device determines, based on the first indication information and the first band combination, whether the target measurement frequency requires the measurement gap. For example, the network device directly determines, according to an indication that is in the first indication information and that indicates whether a band that corresponds to the first band combination and to which the target measurement frequency belongs requires the measurement gap, whether the target measurement frequency requires the measurement gap.

Alternatively, if the first band combination list includes a band combination including the first band combination and a band to which the target measurement frequency belongs, the network device determines that the target measurement frequency does not require the measurement gap. If the first band combination list does not include the band combination including the first band combination and the band to which the target measurement frequency belongs, the network device determines, based on the first indication information, whether the target measurement frequency requires the measurement gap. Optionally, that the network device determines, based on the first capability information and a first band combination, whether the target measurement frequency requires the measurement gap may alternatively be as follows: The network device first determines whether the first band combination list includes a band combination including the first band combination and a band to which the target measurement frequency belongs, and if the first band combination list includes the band combination including the first band combination and the band to which the target measurement frequency belongs, the network device directly determines that the target measurement frequency does not require the measurement gap, or if the first band combination list does not include the band combination including the first band combination and the band to which the target measurement frequency belongs, determines, based on the first indication information and the first band combination, whether the target measurement frequency requires the measurement gap.

Optionally, that the network device determines, based on the second capability information and the second band combination, whether the target measurement frequency requires the measurement gap may be specifically as follows: The network device determines, based on the second indication information and the second band combination, whether the target measurement frequency requires the measurement gap. For example, the network device directly determines, according to an indication that is in the second indication information and that indicates whether a band that corresponds to the second band combination and to which the target measurement frequency belongs requires the measurement gap, whether the target measurement frequency requires the measurement gap.

If the second band combination list includes a band combination including the second band combination and a band to which the target measurement frequency belongs, the network device determines that the target measurement frequency does not require the measurement gap. If the second band combination list does not include the band combination including the second band combination and the band to which the target measurement frequency belongs, the network device determines, based on the second indication information, whether the target measurement frequency requires the measurement gap. Optionally, that the network device determines, based on the second capability information and the second band combination, whether the target measurement frequency requires the measurement gap may alternatively be as follows: The network device first determines whether the second band combination list includes a band combination including the second band combination and a band to which the target measurement frequency belongs, and if the second band combination list includes the band combination including the second band combination and the band to which the target measurement frequency belongs, the network device directly determines that the target measurement frequency does not require the measurement gap; or if the second band combination list does not include the band combination including the second band combination and the band to which the target measurement frequency belongs, the network device determines, based on the second indication information and the second band combination, whether the target measurement frequency requires the measurement gap.

Optionally, in this embodiment, the first band list, the first band combination list, and the first indication information may be separately included in different information elements for reporting, and the second band list, the second band combination list, and the second indication information may be separately included in different information elements for reporting. In a possible manner, the capability information may be sent by the terminal device based on a request of the network device.

S103. The network device sends measurement gap configuration information to the terminal device when determining that the target measurement frequency requires the measurement gap.

The measurement gap configuration information is information used to configure the measurement gap. Optionally, the measurement gap configuration information may include a measurement gap configuration and a type of measurement gap. The type of measurement gap is one of a measurement gap corresponding to the terminal device, a measurement gap corresponding to the first frequency range, and a measurement gap corresponding to the second frequency range. The measurement gap configuration may include a period and/or a length of the measurement gap. Optionally, when two measurement frequencies in frequencies that need to be measured are both in the first frequency range or the second frequency range, and both the two measurement frequencies need a measurement gap, only one measurement gap may be configured, and the two measurement frequencies share the measurement gap.

It should be noted that, when there are a plurality of target measurement frequencies, measurement gap configuration information corresponding to each measurement frequency is sent in one message.

It should be noted that, in this embodiment, the terminal device sends the capability information to the network device. For example, the network device is a base station, and the capability information may be received by a primary base station. The primary base station sends the capability information to a secondary base station. The measurement gap configuration information may be sent by the primary base station or the secondary base station (to be specific, S102 and S103 may be implemented by the primary base station or the secondary base station) to the terminal device. Alternatively, the network device receiving the capability information and the network device sending the measurement gap configuration information to the terminal device may be a same network device.

Optionally, if the network device configures an independent measurement gap (independent gap), namely, a measurement gap corresponding to a frequency range, for the terminal device, and the terminal device supports the independent measurement gap, during the measurement gap, the terminal device stops data transmission in a serving cell in a corresponding FR, and data may continue to be transmitted in another serving cell. Optionally, indication information indicating that the terminal device supports the independent measurement gap may be carried in the capability information. If the terminal device supports the independent measurement gap, and the independent measurement gap includes a measurement gap corresponding to the first frequency range and a measurement gap corresponding to the second frequency range, for a specific target measurement frequency, the type of measurement gap may be one of the measurement gap corresponding to the terminal device, the measurement gap corresponding to the first frequency range, and the measurement gap corresponding to the second frequency range. If the terminal device does not support the independent measurement gap, for a specific target measurement frequency, the type of measurement gap is the measurement gap corresponding to the terminal device.

Optionally, the measurement gap configuration information includes: a first measurement gap configuration and a type of first measurement gap, a second measurement gap configuration, and a type of second measurement gap. The first measurement gap configuration includes a period and/or a length of the first measurement gap, and the second measurement gap configuration includes a period and/or a length of the second measurement gap. The type of first measurement gap is the measurement gap corresponding to the first frequency range, and the type of second measurement gap is the measurement gap corresponding to the second frequency range. In other words, the network device configures two measurement gaps for the terminal device, and indicates types of two measurement gaps. For example, when two frequencies need to be measured, one measurement frequency is in the first frequency range, the other measurement frequency is in the second frequency range, and when both the two measurement frequencies require measurement gaps, two measurement gaps may be configured at the same time. The network device configures the two measurement gaps, one is the measurement gap corresponding to the first frequency range, and the other is the measurement gap corresponding to the second frequency range. The two measurement gaps are configured at the same time.

S104. The terminal device measures the target measurement frequency based on the measurement gap configuration information.

In a possible manner, when the type of measurement gap is the measurement gap corresponding to the first frequency range, in the measurement gap, communication in a serving cell in the first frequency range is stopped, and a neighboring cell in the first frequency range is measured based on the measurement gap configuration. The measurement gap is obtained based on the measurement gap configuration. Alternatively, when the type of measurement gap is the measurement gap corresponding to the second frequency range, in the measurement gap, communication in a serving cell in the second frequency range is stopped based on the measurement gap configuration, and a neighboring cell in the second frequency range is measured. Alternatively, when the type of measurement gap is the measurement gap corresponding to the terminal device, in the measurement gap, communication in all serving cells is stopped based on the measurement gap configuration, and a neighboring cell in the first frequency range and a neighboring cell in the second frequency range are measured.

According to the communication method provided in this embodiment, the terminal device sends the capability information to the network device. The capability information includes the first capability information corresponding to the first frequency range and the second capability information corresponding to the second frequency range. The first capability information and the second capability information are independent information. The first capability information includes the first indication information used to indicate whether a band in the first frequency range requires a measurement gap, and the second capability information includes the second indication information used to indicate whether a band in the second frequency range requires a measurement gap. Then, the network device determines, based on the target measurement frequency of the terminal device, the current operating band combination of the terminal device, and the capability information, whether the target measurement frequency requires the measurement gap. When determining that the target measurement frequency requires the measurement gap, the network device sends the measurement gap configuration information to the terminal device. Finally, the terminal device measures the target measurement frequency based on the measurement gap configuration information. The first capability information corresponding to the first frequency range and the second capability information corresponding to the second frequency range are separated and reported to the network device as independent information, so that reporting specific to a band combination of a band corresponding to the first frequency range and a band corresponding to the second frequency range is avoided, and reporting of an indication that indicates whether a measurement gap is required and that corresponds to the band combination is avoided, thereby reducing signaling overheads, and also reducing storage overheads of the network device.

Technical solutions of a method embodiment shown in FIG. 2 are described in detail below by using a specific embodiment.

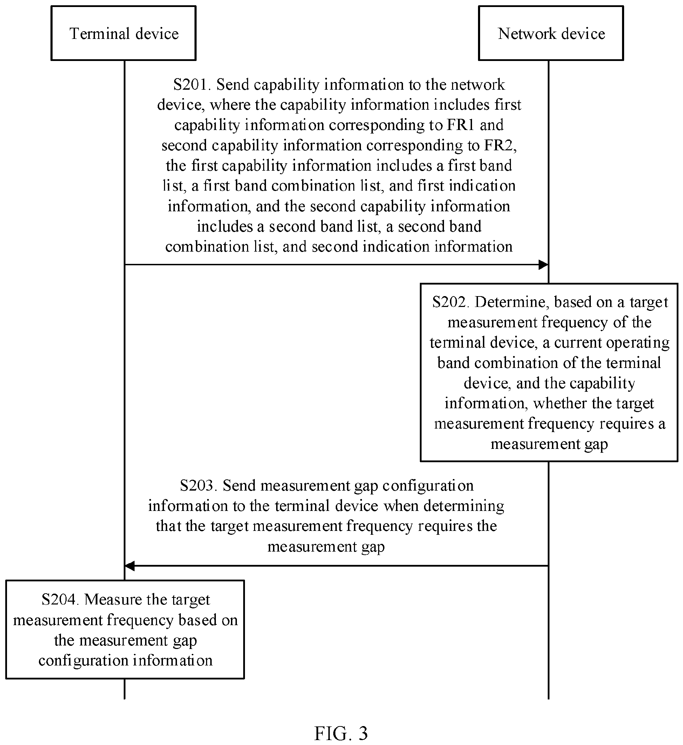

In this embodiment, an example in which a first frequency range and a second frequency range are respectively FR1 and FR2, FR1 is less than 24 GHz, and FR2 is from 24 GHz to 100 GHz is used for description. FIG. 3 is an interaction flowchart of an embodiment of a communication method according to this application. As shown in FIG. 3, the method in this embodiment may include the following steps.

S201. A terminal device sends capability information to a network device, where the capability information includes first capability information corresponding to FR1 and second capability information corresponding to FR2, the first capability information and the second capability information are independent information, the first capability information includes a first band list, a first band combination list, and first indication information used to indicate whether a band in FR1 requires a measurement gap, and the second capability information includes a second band list, a second band combination list, and second indication information used to indicate whether a band in FR2 requires a measurement gap.

When the first capability information includes the first band list (including five bands: a band 1, a band 2, a band 3, a band 4, and a band 5) and the first band combination list (including four band combinations: band 1+band 2, band 1+band 4, band 1+band 2+band 5, and band 2+band 3+band 4), and Table 3 provides an example of a possible manner of indication (denoted as 1 and 0 in the table) indicating whether each band that is in the first band list and that corresponds to each band combination in the first band combination list requires a measurement gap. 1 represents "yes" (the measurement gap is required), and 0 represents "no" (the measurement gap is not required). In this embodiment, the first band list, the first band combination list, and the first indication information may be separately included in different information elements for reporting, and the second band list, the second band combination list, and the second indication information may be separately included in different information elements for reporting. In a possible manner, the capability information may be sent by the terminal device based on a request of the network device.

**Table 3**

|  | Band 1 | Band 2 | Band 3 | Band 4 | Band 5 |
|---|---|---|---|---|---|
| Band 1+band 2 | 1 | 1 | 0 | 0 | 1 |
| Band 1+band 4 | 0 | 0 | 1 | 1 | 0 |
| Band 1+band 2+band 5 | 1 | 1 | 1 | 0 | 1 |
| Band 2+band 3+band 4 | 1 | 1 | 0 | 1 | 1 |

When the second capability information includes the second band list (including five bands: a band 6, a band 7, a band 8, a band 9, and a band 10) and the second band combination list (including six band combinations: band 6+band 7, band 9+band 10, band 6+band 7+band 8, band 8+band 9+band 10, band 6+band 10, and band 7+band 9+band 10), and Table 4 provides an example of a possible manner of indication (denoted as 1 and 0 in the table) indicating whether each band that is in the second band list and that corresponds to each band combination in the second band combination list requires a measurement gap. 1 represents "yes", and 0 represents "no".

**Table 4**

|  | Band 6 | Band 7 | Band 8 | Band 9 | Band 10 |
|---|---|---|---|---|---|
| Band 6+band 7 | 1 | 1 | 0 | 0 | 1 |
| Band 9+band 10 | 0 | 0 | 1 | 1 | 0 |
| Band 6+band 7+band 8 | 1 | 1 | 1 | 0 | 1 |
| Band 8+band 9+band 10 | 1 | 0 | 1 | 1 | 1 |
| Band 6+band 10 | 1 | 1 | 0 | 0 | 1 |
| Band 7+band 9+band 10 | 1 | 0 | 1 | 1 | 1 |

In this embodiment, a band combination in the first band combination list or the second band combination list is indicated by using a band identifier combination.

Optionally, signaling overheads may be further reduced in another manner. As shown in Table 5 and Table 6, some or all of band combinations in the first band combination list or the second band combination list are indicated by using a combination condition. In this embodiment, for example, the combination condition is that a quantity of bands in the band combination is equal to or less than 2. In Table 5, as long as the quantity of bands in each band combination is less than or equal to 2, indications that correspond to the band combination and that indicate whether a measurement gap is required are the same. For example, for band combinations band 1+band 2 and band 1+band 4, a same indication indicating whether each band that is in the first band list and that corresponds to either of the two band combinations requires a measurement gap is used.

**Table 5**

|  | Band 1 | Band 2 | Band 3 | Band 4 | Band 5 |
|---|---|---|---|---|---|
| Quantity of bands in a band combination is less than or equal to 2 | 1 | 1 | 0 | 0 | 1 |
| Band 1+band 2+band 5 | 1 | 1 | 1 | 0 | 1 |
| Band 2+band 3+band 4 | 1 | 1 | 0 | 1 | 1 |

S202. The network device determines, based on a target measurement frequency of the terminal device, a current operating band combination of the terminal device, and the capability information, whether the target measurement frequency requires a measurement gap.

For example, it is assumed that the target measurement frequency is 20 GHz (for example, the target measurement frequency falls within the band 3), and the current operating band combination of the terminal device is band 1+band 2+band 6+band 7, S202 may be as follows: If 20 GHz belongs to FR1, the network device determines, based on the first indication information and a first band combination, whether the target measurement frequency requires the measurement gap. Specifically, a band combination that belongs to FR1 and that is in the current operating band combination of the terminal device is band 1 +band 2. Based on the first indication information shown in Table 3, an indication that is of the band 3 and that corresponds to the band combination band 1+band 2 is "0", and it may be determined that the measurement gap is not required. If the target measurement frequency belongs to FR2, a determining manner is similar. Details are not described herein by using another example.

Optionally, if the first band combination list includes a band combination including the first band combination and a band to which the target measurement frequency belongs, the network device determines that the target measurement frequency does not require the measurement gap. For example, when the target measurement frequency belongs to the band 5, the band combination including the first band combination (band 1+band 2) and the band 5 is band 1+band 2+band 5. When the band combination list shown in Table 3 is used as an example, the first band combination list includes the band combination: band 1+band 2+band 5, and the network device determines that the target measurement frequency does not require the measurement gap. If the first band combination list does not include the band combination including the first band combination and the band to which the target measurement frequency belongs, the network device determines, based on the first indication information, whether the target measurement frequency requires the measurement gap. For example, when the target measurement frequency belongs to the band 3, the band combination including the first band combination (band 1+band 2) and the band 3 is band 1+band 2+band 3. It may be first determined whether the first band combination list includes the band combination: band 1+band 2+band 3. When it is determined that the first band combination list does not include the band combination: band 1+band 2+band 3, it is determined, according to an indication shown in Table 3, that an indication that is of the band 3 and that corresponds to the band combination band 1+band 2 is "0", and it may be determined that the target measurement frequency does not require the measurement gap. In other words, if it is determined that the first band combination list does not include the band combination including the first band combination and the band to which the target measurement frequency belongs, the network device uses the previous method of determining, based on the first indication information and the first band combination, whether the target measurement frequency requires the measurement gap.

S203. The network device sends measurement gap configuration information to the terminal device when determining that the target measurement frequency requires the measurement gap.

The terminal device supports an independent measurement gap, and in the measurement gap, the terminal device stops data transmission in a serving cell in a corresponding FR, and data may continue to be transmitted in another serving cell. Optionally, indication information indicating that the terminal device supports the independent measurement gap may be carried in the capability information. If the terminal device supports the independent measurement gap, for a specific target measurement frequency, a type of measurement gap is one of a measurement gap corresponding to the terminal device, a measurement gap corresponding to the first frequency range, and a measurement gap corresponding to the second frequency range. If the terminal device does not support the independent measurement gap, for the target measurement frequency, the type of measurement gap is the measurement gap corresponding to the terminal device.

S204. The terminal device measures the target measurement frequency based on the measurement gap configuration information.

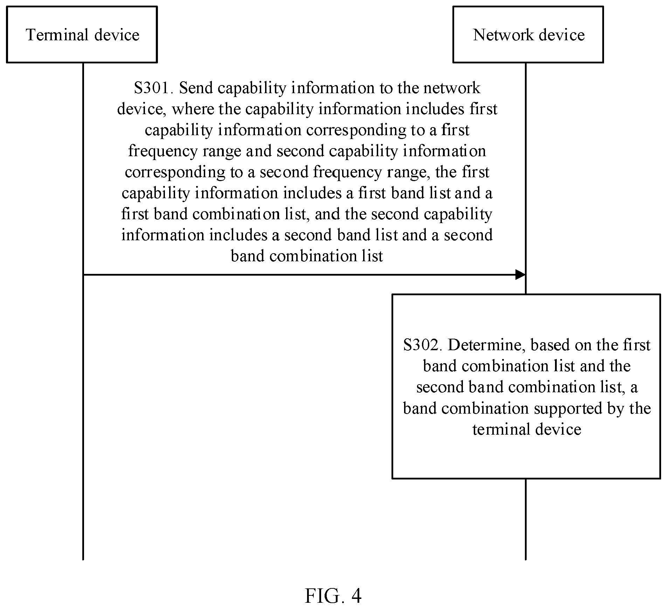

FIG. 4 is an interaction flowchart of an embodiment of another communication method according to this application. As shown in FIG. 4, the method in this embodiment may include the following steps.

S301. A terminal device sends capability information to a network device, where the capability information includes first capability information corresponding to a first frequency range and second capability information corresponding to a second frequency range, the first capability information and the second capability information are independent information, the first capability information includes a first band list and a first band combination list, and the second capability information includes a second band list and a second band combination list.

The first band list is a list including all bands supported by the terminal device in the first frequency range, and the first band combination list is a list including a band combination supported by the terminal device in the first frequency range. The band combination in the first frequency range is a band combination including bands in the first frequency range. The second band list is a list including all bands supported by the terminal device in the second frequency range, and the second band combination list is a list including a band combination supported by the terminal device in the second frequency range. The band combination in the second frequency range is a band combination including bands in the second frequency range.

The first band combination list and the second band combination list are reported to indicate (or to notify the network device) that the terminal device supports combination of any band combination in the first band combination list or a subset of any band combination in the first band combination list with any band combination in the second band combination list or a subset of any band combination in the second band combination list to perform carrier aggregation. In this way, the network device may configure carrier aggregation. Optionally, the first band combination list and the second band combination list are also reported to indicate that the terminal device supports combination of any band combination in the first band combination list with any band in the second band list to perform carrier aggregation, combining any band combination in the second band combination list with any band in the first band list to perform carrier aggregation, and combining any band in the first band list with any band in the second band list to perform carrier aggregation. For example, the first band list includes a band 1, a band 2, and a band 3, the first band combination list includes a combination band 1+band 2 and a combination band 1+band 3, the second band list includes a band 6, a band 7, and a band 8, and the second band combination list includes a combination band 6+band 7 and a combination band 6+band 8. In this case, the terminal device supports combination of any band combination in the first band combination list with any band combination in the second band combination list, namely, band 1+band 2+band 6+band 7, band 1+band 2+band 6+band 8, band 1+band 3+band 6+band 7, and band 1+band 3+band 6+band 8. Optionally, the terminal device also supports combination of any band combination in the first band combination list with any band in the second band list, namely, band 1+band 2+band 6, band 1+band 2+band 7, band 1+band 2+band 8, band 1+band 3+band 6, band 1+band 3+band 7, and band 1+band 3+band 8, also supports combination of any band combination in the second band combination list with any band in the first band list, namely, band 6+band 7+band 1, band 6+band 7+band 2, band 6+band 7+band 3, band 6+band 8+band 1, band 6+band 8+band 2, and band 6+band 8+band 3, and also supports combination of any band in the first band list with any band in the second band list, namely, band 1+band 6, band 1+band 7, band 1+band 8, band 2+band 6, band 2+band 7, band 2+band 8, band 3+band 6, band 3+band 7, and band 3+band 8. In the prior art, the terminal device needs to report all the supported band combinations to a network. To be specific, 29 band combinations need to be reported in the foregoing example. However, based on the method in this embodiment, the terminal device does not need to report a combination of a band in the first frequency range and a band in the second frequency range, and the terminal device needs to report only a band combination in the first frequency range and a band combination in the second frequency range, namely, four band combinations, thereby greatly reducing a quantity of band combinations. Therefore, a size (or may be referred to as a size) of the capability information reported by the terminal device is reduced, signaling overheads are reduced, and storage overheads of the network device can also be reduced.

S302. The network device determines, based on the first band combination list and the second band combination list, a band combination supported by the terminal device.

That the network device determines, based on the first band combination list and the second band combination list, the band combination supported by the terminal device may be as follows: The terminal device may combine any band combination in the first band combination list or a subset of any band combination in the first band combination list with any band combination in the second band combination list or a subset of any band combination in the second band combination list to perform carrier aggregation, thereby configuring carrier aggregation, to determine the band combination supported by the terminal device.

Optionally, the method further includes the following step.

S303. The network device determines, based on a target measurement frequency of the terminal device, a current operating band combination of the terminal device, and the capability information, whether the target measurement frequency requires a measurement gap.

Specifically, if the target measurement frequency belongs to the first frequency range, the network device determines, based on the first capability information and a first band combination, whether the target measurement frequency requires the measurement gap. The first band combination is a band combination that belongs to the first frequency range and that is in the current operating band combination of the terminal device. If the first band combination list includes a band combination including the first band combination and a band to which the target measurement frequency belongs, the network device determines that the target measurement frequency does not require the measurement gap; or if the first band combination list does not include a band combination including the first band combination and a band to which the target measurement frequency belongs, the network device determines that the target measurement frequency requires the measurement gap.

If the target measurement frequency belongs to the second frequency range, the network device determines, based on the second capability information and a second band combination, whether the target measurement frequency requires the measurement gap. The second band combination is a band combination that belongs to the second frequency range and that is in the current operating band combination of the terminal device. If the second band combination list includes a band combination including the second band combination and a band to which the target measurement frequency belongs, the network device determines that the target measurement frequency does not require the measurement gap; or if the second band combination list does not include a band combination including the second band combination and a band to which the target measurement frequency belongs, the network device determines that the target measurement frequency requires the measurement gap.

Based on the method in this embodiment, the terminal device does not need to report separate indication information indicating whether a measurement gap is required, and the network may determine, based on the first band combination list or the second band combination list in the capability information reported by the terminal device, whether the measurement gap is required. Therefore, a size (or may be referred to as a size) of the capability information reported by the terminal device is reduced, signaling overheads are reduced, and storage overheads of the network device can also be reduced.

Further, in the communication method provided in this embodiment, the terminal device sends the capability information to the network device. The capability information includes the first capability information corresponding to the first frequency range and the second capability information corresponding to the second frequency range, and the first capability information and the second capability information are independent information. The first capability information includes the first band list and the first band combination list, and the second capability information includes the second band list and the second band combination list. The network device determines, based on the target measurement frequency of the terminal device, the current operating band combination of the terminal device, and the capability information, whether the target measurement frequency requires the measurement gap. The first capability information corresponding to the first frequency range and the second capability information corresponding to the second frequency range are reported as independent information, thereby reducing signaling overheads, and also reducing storage overheads of the network device.

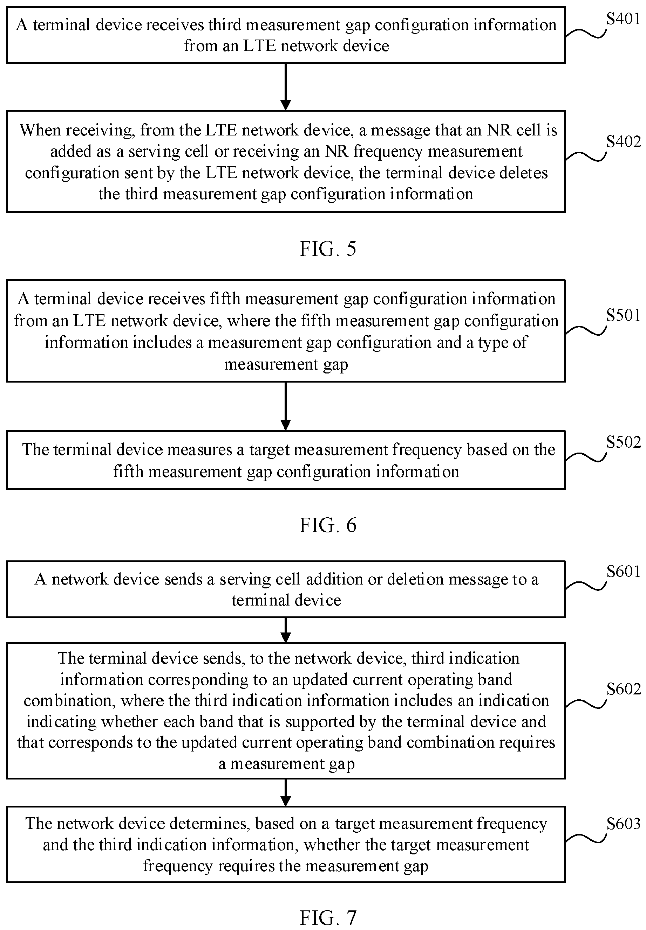

Optionally, this application further provides a communication method. FIG. 5 is a flowchart of an embodiment of a communication method according to this application. As shown in FIG. 5, the method in this embodiment may include the following steps.

S401. A terminal device receives third measurement gap configuration information from an LTE network device.

After accessing the LTE network device, the terminal device receives the third measurement gap configuration information from the LTE network device. The third measurement gap configuration information includes a measurement gap configuration (for example, a period and/or a length of a measurement gap), but does not include a type of measurement gap. In other words, in the third measurement gap configuration information, the measurement gap configuration is not associated with the type of measurement gap.

S402. When receiving, from the LTE network device, a message that an NR cell is added as a serving cell or receiving an NR frequency measurement configuration sent by the LTE network device, the terminal device deletes the third measurement gap configuration information.

When the terminal device requires a measurement gap, the network device needs to reconfigure the measurement gap for the terminal device. In this case, optionally, this embodiment of this application may further include the following steps.

S403. A network device sends fourth measurement gap configuration information to the terminal device.

The fourth measurement gap configuration information includes a measurement gap configuration and a type of measurement gap.

The type of measurement gap is one of a measurement gap corresponding to the terminal device, a measurement gap corresponding to a first frequency range, and a measurement gap corresponding to a second frequency range. The measurement gap configuration may include a period and/or a length of the measurement gap.

Optionally, the network device in S403 may be the LTE network device in S401, or may be a network device in a 5G system or another system.

In a possible manner, the fourth measurement gap configuration information herein may be determined in the manner shown in any embodiment of FIG. 2 to FIG. 4. It may be understood that the fourth measurement gap configuration information may alternatively be determined in another manner. This is not limited in this embodiment of this application.

S404. The terminal device measures the target measurement frequency based on the measurement gap configuration information.

In this embodiment, the terminal device deletes a measurement gap configured in an LTE system, to resolve a problem that whether the measurement gap configured in LTE can be used to measure a neighboring cell in FR2 is unclear due to a type of measurement gap is not indicated after the terminal device receives the message that an NR cell is added as a serving cell or receives the NR frequency measurement configuration.

Further, when the terminal device requires a measurement gap, the network device reconfigures the measurement gap for the terminal device, and indicates a type of measurement gap, to resolve a problem of how to perform measurement configuration.

FIG. 6 is a flowchart of an embodiment of a communication method according to this application. As shown in FIG. 6, the method in this embodiment may include the following steps.

S501. A terminal device receives fifth measurement gap configuration information from an LTE network device, where the fifth measurement gap configuration information includes a measurement gap configuration and a type of measurement gap.

S502. The terminal device measures a target measurement frequency based on the fifth measurement gap configuration information.

After accessing the LTE network device, the terminal device receives the fifth measurement gap configuration information from the LTE network device. The fifth measurement gap configuration information includes the measurement gap configuration (for example, a period and/or a length of the measurement gap) and the type of measurement gap. The type of measurement gap is one of a measurement gap corresponding to the terminal device, a measurement gap corresponding to a first frequency range, and a measurement gap corresponding to a second frequency range. The measurement gap configuration is specifically the period and/or the length of the measurement gap. When an LTE network determines that the terminal device supports NR or a frequency range FR2, the network device configures the fifth measurement gap configuration information, and the fifth measurement gap configuration information carries the type of measurement gap, to avoid a problem that whether the measurement gap can be used to measure a neighboring cell in FR2 is unclear due to a type of measurement gap is not indicated.

Optionally, the method in this embodiment may further include the following step.

S503. When receiving, from the LTE network device, a message that an NR cell is added as a serving cell or receiving an NR frequency measurement configuration sent by the LTE network device, the terminal device measures the target measurement frequency based on the fifth measurement gap configuration information.

In this embodiment, further, the LTE network device configures the measurement gap for the terminal device, and indicates the type of measurement gap. Therefore, when the terminal device receives the message that an NR cell as a serving cell or receives the NR frequency measurement configuration, the terminal device can determine, based on the fifth measurement gap configuration information, whether the measurement gap can be used to measure the neighboring cell in FR2.

Optionally, an embodiment of this application further provides a communication method. When a terminal device receives a configured measurement gap in LTE, if a type of measurement gap is not configured, the type of measurement gap is by default a measurement gap corresponding to the terminal device or a measurement gap corresponding to a first frequency range. The first frequency range is less than 24 GHz. Alternatively, the terminal device determines, based on capability information and a measurement configuration, the type of measurement gap. Therefore, a problem, that whether the measurement gap configured in LTE can be used to measure a neighboring cell in FR2 is unclear due to a type of measurement gap is not indicated after the terminal device receives a message that an NR cell is added as a serving cell or receives an NR frequency measurement configuration, is resolved.

Optionally, this application further provides a communication method. FIG. 7 is a flowchart of an embodiment of a communication method according to this application. As shown in FIG. 7, the method in this embodiment may include the following steps:

S601. A network device sends a message used for adding or deleting a serving cell to a terminal device.

S602. The terminal device sends, to the network device, third indication information corresponding to an updated current operating band combination, where the third indication information includes an indication indicating whether each band that is supported by the terminal device and that corresponds to the updated current operating band combination requires a measurement gap.

S603. The network device determines, based on a target measurement frequency and the third indication information, whether the target measurement frequency requires the measurement gap.

Specifically, after the terminal device receives the message used for adding or deleting a serving cell, in other words, the serving cell is changed, a current operating band combination of the terminal device changes, and whether the measurement gap is required for measurement of a target frequency may also change. In this case, the terminal device feeds back a current updated measurement gap capability to the network device. In other words, the terminal device feeds back, to the network device, information about whether a measurement gap is required when the terminal device measures a supported band in the current operating band combination, so that when configuring the measurement gap, the network device can determine whether to configure the measurement gap. For example, two serving cells serve the terminal device, and the two serving cells use frequency resources respectively belonging to a band 1 and a band 2. After the network device adds a new serving cell (a frequency resource used by the serving cell belongs to a band 3) for the terminal device, the current operating band combination of the terminal device is band 1+band 2+band 3, and the terminal device feeds back, to the network device, information about whether a gap is required for measurement of a supported band in the band combination: band 1+band 2+band 3. If a network deletes a serving cell in the band 2, a current operating band combination of the terminal device is band 1+band 3, and the terminal device feeds back, to the network device, information about whether a gap is required for measurement of a supported band in the band combination: band 1+band 3. Therefore, a problem of how to configure the measurement gap after the serving cell of the terminal device is changed is resolved.

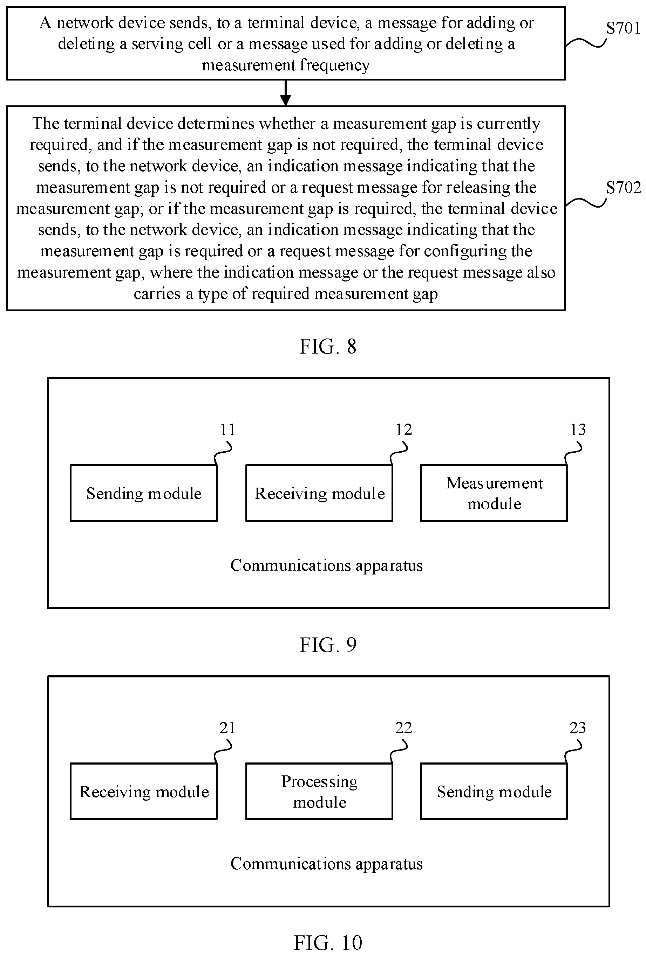

FIG. 8 is a flowchart of an embodiment of a communication method according to this application. As shown in FIG. 8, the method in this embodiment may include the following steps:

S701. A network device sends, to a terminal device, a message for adding or deleting a serving cell or a message used for adding or deleting a measurement frequency.

S702. The terminal device determines whether a measurement gap is currently required, and if the measurement gap is not required, the terminal device sends, to the network device, an indication message indicating that the measurement gap is not required or a request message for releasing the measurement gap; or if the measurement gap is required, the terminal device sends, to the network device, an indication message indicating that the measurement gap is required or a request message for configuring the measurement gap, where the indication message or the request message carries a type of required measurement gap.

Specifically, when the measurement gap is configured for the terminal device, and when a specific serving cell or a specific measurement frequency of the terminal device is deleted, the terminal device may no longer require the measurement gap. In this case, the terminal device sends, to the network device, the indication message indicating that the measurement gap is not required or the request message for releasing the measurement gap. When receiving the indication indicating that the measurement gap is not required or the request for releasing the measurement configuration, the network device performs corresponding processing, for example, releasing of the measurement configuration.

When a serving cell or a measurement frequency is added for the terminal device, the terminal device determines that a measurement gap is currently required, and the terminal device feeds back, to the network device, information indicating that the gap is required and information about a type of required gap. The type of gap is one of a measurement gap corresponding to the terminal device, a measurement gap corresponding to a first frequency range, and a measurement gap corresponding to a second frequency range. After receiving the information that is fed back by the terminal device and that indicates the gap is required, the network device configures the corresponding type of gap for the terminal device. Therefore, a problem of how to configure the measurement gap after the serving cell is added or deleted or after the measurement frequency is added or deleted is resolved without a need to report capability information, thereby reducing signaling overheads.

It may be understood that in the foregoing method embodiments, an operation performed by the terminal device may alternatively be implemented by a component (for example, a chip or a circuit) that may be used in a terminal, and an operation performed by the network device may alternatively be implemented by a component (for example, a chip or a circuit) that may be used in a network device.

FIG. 9 is a schematic structural diagram of an embodiment of a communications apparatus according to this application. The communications apparatus may be a terminal device, or may be a component (for example, a chip or a circuit) that may be used in a terminal device. As shown in FIG. 9, the apparatus in this embodiment may include: a sending module 11, a receiving module 12, and a measurement module 13.

The sending module 11 is configured to send capability information to a network device, where the capability information includes first capability information corresponding to a first frequency range and second capability information corresponding to a second frequency range, the first capability information and the second capability information are independent information, the first capability information includes first indication information used to indicate whether a band in the first frequency range requires a measurement gap, and the second capability information includes second indication information used to indicate whether a band in the second frequency range requires a measurement gap.

The receiving module 12 is configured to receive measurement gap configuration information determined based on the capability information, where the measurement gap configuration information is information used to configure a measurement gap.

The measurement module 13 is configured to perform measurement based on the measurement gap configuration information.

Optionally, the measurement module 13 is configured to: when a type of measurement gap is a measurement gap corresponding to the first frequency range, in the measurement gap, stop communication in a serving cell in the first frequency range, and measure a neighboring cell in the first frequency range; or when a type of measurement gap is a measurement gap corresponding to the second frequency range, in the measurement gap, stop communication in a serving cell in the second frequency range, and measure a neighboring cell in the second frequency range; or when a type of measurement gap is a measurement gap corresponding to the terminal device, in the measurement gap, stop communication in all serving cells, and measure a neighboring cell in the first frequency range and a neighboring cell in the second frequency range.

In this embodiment, optionally, the first frequency range is from 0 GHz to 24 GHz, and the second frequency range is from 24 GHz to 100 GHz.

The apparatus in this embodiment may be configured to perform the technical solution in the method embodiment shown in FIG. 2 or FIG. 3. Implementation principles and technical effects thereof are similar. For an operation implemented by each module, refer to related descriptions in the method embodiments. Details are not described herein again. The module herein may alternatively be replaced with a component or a circuit.

FIG. 10 is a schematic structural diagram of an embodiment of a communications apparatus according to this application. As shown in FIG. 10, the communications apparatus may include: a receiving module 21, a processing module 22, and a sending module 23.

The receiving module 21 is configured to receive capability information, where the capability information includes first capability information corresponding to a first frequency range and second capability information corresponding to a second frequency range, the first capability information and the second capability information are independent information, the first capability information includes first indication information used to indicate whether a band in the first frequency range requires a measurement gap, and the second capability information includes second indication information used to indicate whether a band in the second frequency range requires a measurement gap.

The processing module 22 is configured to determine, based on a target measurement frequency of a terminal device, a current operating band combination of the terminal device, and the capability information, whether the target measurement frequency requires a measurement gap.

The sending module 23 is configured to: when it is determined that the target measurement frequency requires the measurement gap, send measurement gap configuration information to the terminal device. The measurement gap configuration information is information used to configure the measurement gap.

Optionally, the processing module 22 is configured to: if the target measurement frequency belongs to the first frequency range, determine, based on the first capability information and a first band combination, whether the target measurement frequency requires the measurement gap, where the first band combination is a band combination that belongs to the first frequency range and that is in the current operating band combination of the terminal device; or if the target measurement frequency belongs to the second frequency range, determine, based on the second capability information and a second band combination, whether the target measurement frequency requires the measurement gap, where the second band combination is a band combination that belongs to the second frequency range and that is in the current operating band combination of the terminal device.

In a possible manner, the processing module 22 is configured to: determine, based on the first indication information and the first band combination, whether the target measurement frequency requires the measurement gap; or if the first band combination list includes a band combination including the first band combination and a band to which the target measurement frequency belongs, determine that the target measurement frequency does not require the measurement gap.

In a possible manner, the processing module 22 is configured to: determine, based on the second indication information and the second band combination, whether the target measurement frequency requires the measurement gap; or if the second band combination list includes a band combination including the second band combination and a band to which the target measurement frequency belongs, determine that the target measurement frequency does not require the measurement gap.

The apparatus in this embodiment may be configured to perform the technical solution in the method embodiment shown in FIG. 2 or FIG. 3. For an operation implemented by each module, refer to related descriptions in the method embodiments. Implementation principles and technical effects thereof are similar. Details are not described herein again. The module herein may alternatively be replaced with a component or a circuit.

In this application, functional modules in the communications apparatus may be obtained through division based on the foregoing method examples. For example, each functional module corresponding to each function may be obtained through division, or two or more functions may be integrated into one processing module. The integrated module may be implemented in a form of hardware, or may be implemented in a form of a software functional module. It should be noted that, in this embodiment of this application, module division is an example, and is merely a logical function division. In actual implementation, another division manner may be used.

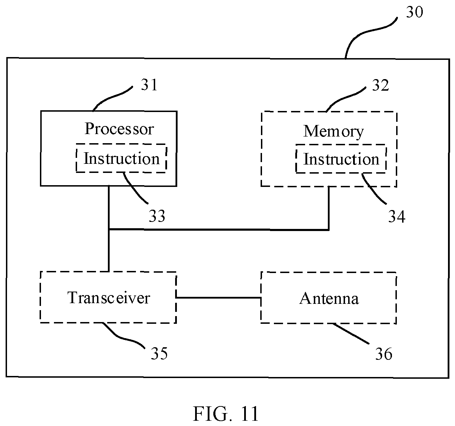

FIG. 11 is a schematic structural diagram of a communications apparatus according to this application. The communications apparatus 30 may be the network device 20 or the terminal 10 in FIG. 1. The communications apparatus may be configured to implement a method in a corresponding part described in the foregoing method embodiments. For details, refer to descriptions in the foregoing method embodiments.

The communications apparatus 30 may include one or more processors 31. The processor 31 may also be referred to as a processing unit, and may implement a specific control function. The processor 31 may be a general-purpose processor, a dedicated processor, or the like. For example, the processor 31 may be a baseband processor or a central processing unit. The baseband processor may be configured to process a communications protocol and communications data. The central processing unit may be configured to: control the communications apparatus (for example, a base station, a baseband chip, a DU, or a CU), execute a software program, and process data of the software program.

In a possible design, the processor 31 may alternatively store an instruction 33, and the instruction may be run by the processor, so that the communications apparatus 30 performs the method that corresponds to the terminal or the network device and that is described in the foregoing method embodiments.

In another possible design, the communications apparatus 30 may include a circuit. The circuit may implement the sending, receiving, or communication function in the foregoing method embodiments.

Optionally, the communications apparatus 30 may include one or more memories 32. The memory stores an instruction 34 or intermediate data. The instruction 34 may be run on the processor 31, so that the communications apparatus 30 performs the method described in the foregoing embodiments. Optionally, the memory may alternatively store other related data. Optionally, the processor 31 may alternatively store an instruction and/or data. The processor 31 and the memory 32 may be separately disposed, or may be integrated together.

Optionally, the communications apparatus 30 may further include a transceiver 35 and an antenna 36. The processor 31 may be referred to as a processing unit. The transceiver 35 may be referred to as a transceiver unit, a transceiver, a transceiver circuit, a transceiver, or the like, and is configured to implement sending and receiving functions of the communications apparatus.

In a design, a communications apparatus (for example, an integrated circuit, a wireless device, a circuit module, a network device, or a terminal device) may include a processor and a transceiver. If the communications apparatus is configured to implement an operation of the terminal device in any embodiment corresponding to FIG. 2 to FIG. 4, for example, the transceiver may send capability information and receive measurement gap configuration information, and the processor measures a target measurement frequency based on the measurement gap configuration information. For a specific processing manner, refer to the related descriptions in the foregoing embodiments. If the communications apparatus is configured to implement an operation of any network device corresponding to FIG. 2 to FIG. 4, for example, the transceiver may receive the capability information, the processor determines, based on the target measurement frequency of the terminal device, a current operating band combination of the terminal device, and the capability information, whether the target measurement frequency requires a measurement gap, and the transceiver sends the measurement gap configuration information to the terminal device when it is determined that the target measurement frequency requires the measurement gap. For a specific processing manner, refer to the related descriptions in the foregoing embodiments.

If the communications apparatus is configured to implement an operation of the terminal device in the embodiment corresponding to FIG. 5, for example, when the transceiver receives third measurement gap configuration information from an LTE network device and receives, from the LTE network device, a message that an NR cell is added as a serving cell, or receives an NR frequency measurement configuration sent by the LTE network device, the processor deletes the third measurement gap configuration information. For a specific processing manner, refer to the related descriptions in the foregoing embodiments. If the communications apparatus is configured to implement an operation of the network device in the embodiment corresponding to FIG. 5, for example, the transceiver may send the third measurement gap configuration information to the terminal device. For a specific processing manner, refer to the related descriptions in the foregoing embodiments.

If the communications apparatus is configured to implement an operation of the terminal device in the embodiment corresponding to FIG. 6, for example, the transceiver may receive fifth measurement gap configuration information from an LTE network device, and the processor measures a target measurement frequency based on the fifth measurement gap configuration information. For a specific processing manner, refer to the related descriptions in the foregoing embodiments. If the communications apparatus is configured to implement an operation of the network device in the embodiment corresponding to FIG. 5, for example, the transceiver may send the fifth measurement gap configuration information to the terminal device. For a specific processing manner, refer to the related descriptions in the foregoing embodiments.

If the communications apparatus is configured to implement an operation of the terminal device in the embodiment corresponding to FIG. 7, for example, the transceiver may receive a message used for adding or deleting a serving cell from an LTE network device, and send, to the network device, third indication information corresponding to an updated current operating band combination. For a specific processing manner, refer to the related descriptions in the foregoing embodiments. If the communications apparatus is configured to implement an operation of the network device in the embodiment corresponding to FIG. 7, for example, the transceiver may send the message used for adding or deleting a serving cell to the terminal device, and receive, from the terminal device, the third indication information corresponding to the updated current operating band combination. The processor determines, based on a target measurement frequency and the third indication information, whether the target measurement frequency requires a measurement gap. For a specific processing manner, refer to the related descriptions in the foregoing embodiments.

If the communications apparatus is configured to implement an operation of the terminal device in the embodiment corresponding to FIG. 8, for example, the transceiver may receive, from a network device, a message used for adding or deleting a serving cell or a message used for adding or deleting a measurement frequency, and the processor determines whether a measurement gap is currently required; and when the processor determines that the measurement gap is not required, the transceiver sends, to the network device, an indication message indicating that the measurement gap is not required or a request message for releasing the measurement gap; or when the processor determines that the measurement gap is required, the transceiver sends, to the network device, an indication message indicating that the measurement gap is required or a request message for configuring the measurement gap. The indication message or the request message also carries a type of required measurement gap. For a specific processing manner, refer to the related descriptions in the foregoing embodiments. If the communications apparatus is configured to implement an operation of the network device in the embodiment corresponding to FIG. 8, for example, the transceiver may send, to the terminal device, the message used for adding or deleting a serving cell or a message used for adding or deleting a measurement frequency, and receive an indication message indicating that the measurement gap is not required or a request message for releasing the measurement gap or receive an indication message indicating that the measurement gap is required or a request message for configuring the measurement gap. For a specific processing manner, refer to the related descriptions in the foregoing embodiments.

The processor and the transceiver described in this application may be implemented on an integrated circuit (integrated circuit, IC), an analog IC, a radio frequency integrated circuit RFIC, a hybrid signal IC, an application-specific integrated circuit (application specific integrated circuit, ASIC), a printed circuit board (printed circuit board, PCB), an electronic device, or the like. The processor and the transceiver may also be manufactured by using various 1C technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

In the foregoing embodiment descriptions, the communications apparatus is described by using the network device 20 or the terminal device 10 as an example, but the communications apparatus described in this application is not limited to the network device, and a structure of the communications apparatus may not be limited by FIG. 11. The communications apparatus may be an independent device or may be a part of a relatively large device. For example, the device may be as follows:

(1) an independent integrated circuit (IC), a chip, or a chip system or subsystem;
(2) a set having one or more ICs, where optionally, the IC set may also include a storage component configured to store data and/or an instruction;
(3) an ASIC, for example, a modem (MSM);
(4) a module that can be embedded in another device;
(5) a receiver, a terminal, a cellular phone, a wireless device, a hand-held phone, a mobile unit, a network device, or the like; and
(6) others or the like.

This application further provides a readable storage medium. The readable storage medium stores an execution instruction. When at least one processor of a communications apparatus executes the execution instruction, the communications apparatus performs the communication method in the foregoing method embodiments.

This application further provides a chip. The chip is connected to a memory, or a memory is integrated on the chip. When a software program stored in the memory is executed, the communication method in the foregoing method embodiments is implemented.

This application further provides a program product. The program product includes an execution instruction, and the execution instruction is stored in a readable storage medium. At least one processor of a communications apparatus may read the execution instruction from the readable storage medium, and the at least one processor executes the execution instruction, so that the communications apparatus implements the communication method in the foregoing method embodiments.

Further embodiments of the present invention are provided in the following. It should be noted that the numbering used in the following section does not necessarily need to comply with the numbering used in the previous sections.

Embodiment 1. A communication method, comprising:

receiving measurement gap configuration information from a long term evolution, LTE, network device, wherein the measurement gap configuration information indicates a measurement gap configuration and a type of measurement gap; and
measuring a target measurement frequency based on the measurement gap configuration information.

Embodiment 2. The method according to embodiment 1, wherein the type of measurement gap is one of a measurement gap corresponding to a terminal device and a measurement gap corresponding to a first frequency range FR1.

Embodiment 3. The method according to embodiment 2, wherein the measuring a target measurement frequency based on the measurement gap configuration information comprises:
when the type of measurement gap is the measurement gap corresponding to the first frequency range FR1, in the measurement gap, stopping communication in a serving cell in the first frequency range, and measuring a neighboring cell in the first frequency range.

Embodiment 4. The method according to embodiment 2 or 3, wherein the measuring a target measurement frequency based on the measurement gap configuration information comprises:
when the type of measurement gap is the measurement gap corresponding to the terminal device, in the measurement gap, stopping communication in all serving cells.

Embodiment 5. The method according to any one of embodiments 1 to 3, wherein the measurement gap configuration comprises a period and/or a length of the measurement gap.

Embodiment 6. The method according to any one of embodiments 1 to 3, wherein when the measurement gap configuration information does not comprise the type of measurement gap, the type of measurement gap is the measurement gap corresponding to the terminal device by default

Embodiment 7. A communication method, comprising:

generating, by a network device, measurement gap configuration information, wherein the measurement gap configuration information indicates a measurement gap configuration and a type of measurement gap; and
sending the measurement gap configuration information to a terminal device.

Embodiment 8. The method according to embodiment 7, wherein the type of measurement gap is one of a measurement gap corresponding to a terminal device and a measurement gap corresponding to a first frequency range FR1..

Embodiment 9. The method according to embodiment 7 or 8, wherein the measurement gap configuration comprises a period and/or a length of the measurement gap.

Embodiment 10. The method according to any one of embodiments 7 to 9, wherein when the measurement gap configuration information does not comprise the type of measurement gap, the type of measurement gap is a measurement gap corresponding to the terminal device by default.

A person of ordinary skill in the art may understand that all or some of the foregoing embodiments may be implemented by using software, hardware, firmware, or any combination thereof. When being implemented by using the software, all or some of the embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave) manner. The computer-readable storage medium may be any usable medium accessible to the computer, or a data storage device, such as a server or a data center, integrating one or more usable media. The usable medium may be a magnetic medium (for example, a floppy disk, a hard disk, or a magnetic tape), an optical medium (for example, a DVD), a semi-conductor medium (for example, a solid-state drive Solid State Disk (SSD)), or the like.

For same or similar parts in the embodiments of this specification, refer to these embodiments.

The foregoing implementations of this application do not construct a limitation on the protection scope of this application.

**Claims**

1. A communication method comprising:

receiving, a first indication that indicates adding or deleting a serving cell or a measurement frequency; and sending a second indication indicating whether a measurement gap is needed for a corresponding frequency band.

2. The method according to claim 1, further comprising:
receiving a measurement gap configuration, the measurement gap configuration being based on the second indication.

3. The method according to claim 2, further comprising:
performing measurement based on the measurement gap configuration.

4. The method according to claim 2 or 3, wherein the measurement gap configuration comprises a period or a length of a measurement gap.

5. The method according to claim 2 or 3, wherein the measurement gap configuration comprises a period and a length of the measurement gap.

6. The method according to any one of claims 1 to 5, wherein the corresponding frequency band is a frequency band in a band combination.

7. A communication method, comprising:

sending a first indication that indicates adding or deleting a serving cell or a measurement frequency; and receiving a second indication indicating whether a measurement gap is needed for a corresponding frequency band.

8. The method according to claim 7, further comprising:
determining a measurement gap configuration based on the second indication.

9. The method according to claim 8, further comprising:
sending the measurement gap configuration.

10. The method according to claim 8, wherein the measurement gap configuration comprises a period or a length of a measurement gap; or wherein the measurement gap configuration comprises a period and a length of the measurement gap.

11. The method according to any one of claims 7-10, wherein the corresponding frequency band is a frequency band in a band combination.

12. A communications apparatus, configured to implement the method according to any one of claims 1-6.

13. A communications apparatus, configured to implement the method according to any one of claims 7-12.

14. A computer-readable storage medium comprising an instruction, wherein when the instruction is run, the method according to any one of claims 1 to 11 is performed.

15. A computer program product, comprising at least one instruction which, when executed, cause an apparatus to carry out the method according to any one of claims 1-11.

FIG. 1

Terminal device

Network device

S101. Send capability information to the network device, where the capability information includes first capability information corresponding to a first frequency range and second capability information corresponding to a second frequency range, the first capability information includes first indication information, and the second capability information includes second indication information

S102. Determine, based on a target measurement frequency of the terminal device, a current operating band combination of the terminal device, and the capability information, whether the target measurement frequency requires a measurement gap

S103. Send measurement gap configuration information to the terminal device when determining that the target measurement frequency requires the measurement gap

S104. Measure the target measurement frequency based on the measurement gap configuration information

FIG. 2

| Terminal device | | Network device |
|---|---|---|

S201. Send capability information to the network device, where the capability information includes first capability information corresponding to FR1 and second capability information corresponding to FR2, the first capability information includes a first band list, a first band combination list, and first indication information, and the second capability information includes a second band list, a second band combination list, and second indication information

S202. Determine, based on a target measurement frequency of the terminal device, a current operating band combination of the terminal device, and the capability information, whether the target measurement frequency requires a measurement gap

S203. Send measurement gap configuration information to the terminal device when determining that the target measurement frequency requires the measurement gap

S204. Measure the target measurement frequency based on the measurement gap configuration information

FIG. 3

Terminal device

Network device

S301. Send capability information to the network device, where the capability information includes first capability information corresponding to a first frequency range and second capability information corresponding to a second frequency range, the first capability information includes a first band list and a first band combination list, and the second capability information includes a second band list and a second band combination list

S302. Determine, based on the first band combination list and the second band combination list, a band combination supported by the terminal device

FIG. 4

A terminal device receives third measurement gap configuration information from an LTE network device    S401

When receiving, from the LTE network device, a message that an NR cell is added as a serving cell or receiving an NR frequency measurement configuration sent by the LTE network device, the terminal device deletes the third measurement gap configuration information    S402

FIG. 5

A terminal device receives fifth measurement gap configuration information from an LTE network device, where the fifth measurement gap configuration information includes a measurement gap configuration and a type of measurement gap    S501

The terminal device measures a target measurement frequency based on the fifth measurement gap configuration information    S502

FIG. 6

A network device sends a serving cell addition or deletion message to a terminal device    S601

The terminal device sends, to the network device, third indication information corresponding to an updated current operating band combination, where the third indication information includes an indication indicating whether each band that is supported by the terminal device and that corresponds to the updated current operating band combination requires a measurement gap    S602

The network device determines, based on a target measurement frequency and the third indication information, whether the target measurement frequency requires the measurement gap    S603

FIG. 7

A network device sends, to a terminal device, a message for adding or deleting a serving cell or a message used for adding or deleting a measurement frequency ⟶ S701

The terminal device determines whether a measurement gap is currently required, and if the measurement gap is not required, the terminal device sends, to the network device, an indication message indicating that the measurement gap is not required or a request message for releasing the measurement gap; or if the measurement gap is required, the terminal device sends, to the network device, an indication message indicating that the measurement gap is required or a request message for configuring the measurement gap, where the indication message or the request message also carries a type of required measurement gap ⟶ S702

FIG. 8

| | | |
|---|---|---|
| 11 | 12 | 13 |
| Sending module | Receiving module | Measurement module |

Communications apparatus

FIG. 9

| | | |
|---|---|---|
| 21 | 22 | 23 |
| Receiving module | Processing module | Sending module |

Communications apparatus

FIG. 10

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810037251